# FASCICULE DE BREVET EUROPEEN

(11) **EP 4 339 097 B1**
(45) Date de publication et mention de la délivrance du brevet: **27.08.2025**
(21) Numéro de dépôt: 23193942.2
(22) Date de dépôt: 29.08.2023
(51) Int. Cl.: B64C 25/40, F16H 1/28

(54) **DISPOSITIF D'ENTRAINEMENT D'AU MOINS UNE ROUE D'UN TRAIN D'ATTERRISSAGE D'AÉRONEF**
VORRICHTUNG ZUM ANTRIEB MINDESTENS EINES RADES EINES FLUGZEUGFAHRWERKS
DEVICE FOR DRIVING AT LEAST ONE WHEEL OF AN AIRCRAFT LANDING GEAR

(30) Priorité: 16.09.2022 FR 2209341
(43) Date de publication de la demande: 20.03.2024
(73) Titulaire: Safran Transmission Systems, 92700 Colombes (FR)
(72) Inventeur: FERNANDEZ, Maxime, 77550 Moissy-Cramayel (FR); FRANCOIS, Loïc, 77550 Moissy-Cramayel (FR); MORELLI, Boris Pierre Marcel, 77550 Moissy-Cramayel (FR); PELTIER, Jordane Emile André, 77550 Moissy-Cramayel (FR)
(74) Mandataire: Gevers & Orès

(56) Documents cités:
- EP-A1- 4 001 619
- WO-A1-2016/202909
- WO-A1-2022/150906
- WO-A2-2005/035358

## Description

### Domaine technique de l'invention

La présente invention concerne un dispositif d'entraînement d'au moins une roue d'un train d'atterrissage d'aéronef.

### Arrière-plan technique

L'arrière-plan technique comprend notamment les documents WO-A1-2016/202909, EP-A1-4 001 619, WO-A-1-2022/150906 et WO-A2-2005/035358. En particulier, WO 2016/202909 A1 divulgue un atterrisseur pour aéronef comprenant une roue et un moteur électrique propre à entraîner la roue, un mécanisme de transmission configuré pour transmettre un couple généré par le moteur électrique.

EP 4 001 619 A1 divulgue un réducteur mécanique de turbomachine, en particulier d'aéronef, comportant un solaire, une couronne, des satellites qui sont engrenés avec le solaire et la couronne, des paliers hydrodynamiques de guidage en rotation des satellites.

Un aéronef comprend des trains d'atterrissage équipés de roues pour les déplacements de l'aéronef au sol sur un tarmac. Ce roulage aussi appelé taxiage (de l'anglais taxiing) peut être obtenu en propulsant l'aéronef grâce à ses turbomachines.

Pour limiter la consommation de carburant et l'impact sur l'environnement, il est connu de réaliser ce taxiage de manière électrique. Le taxiage électrique est obtenu en entraînant les roues d'un train d'atterrissage par un moteur électrique.

La présente demande propose un perfectionnement aux technologies existantes et concerne ainsi un dispositif à moteur électrique pour l'entraînement d'au moins une roue d'un train d'atterrissage d'aéronef.

Une solution consistant à utiliser un réducteur pour transmettre la puissance d'un moteur électrique à une roue d'un train d'atterrissage a été proposée par la Demanderesse dans le document EP-A1-3 882 136.

Le rôle d'un réducteur mécanique est de modifier le rapport de vitesse et de couple entre l'axe d'entrée et l'axe de sortie d'un système mécanique.

Dans le domaine éloigné des turbomachines d'aéronef, il est connu d'utiliser un réducteur mécanique pour assurer une transmission de puissance entre deux arbres mécaniques rotatifs.

Il existe de nombreux types de réducteurs par exemple différentiels, planétaires, épicycloïdaux, à lignes intermédiaires, à étages de réduction en série, etc.

Dans l'état de l'art des turbomachines à double flux, les réducteurs sont de type planétaire ou épicycloïdal. Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal de la turbomachine. Les satellites ont chacun un axe de révolution différents équirépartis sur le même diamètre de fonctionnement autour de l'axe des planétaires. Ces axes sont parallèles à l'axe longitudinal de la turbomachine.

Il existe plusieurs architectures de réducteur. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites.

Les réducteurs peuvent être composés d'un ou plusieurs étages d'engrènement. Cet engrènement est assuré de différentes façons comme par contact, par friction ou encore par champs magnétique.

Dans la présente demande, on entend par « étage » ou « denture », au moins une série de dents d'engrènement avec au moins une série de dents complémentaires. Une denture peut être interne ou externe.

Un satellite peut comprendre un ou deux étages d'engrènement. Un satellite à simple étage comprend une denture qui peut être droite, hélicoïdale ou en chevron et dont les dents sont situées sur un même diamètre. Cette denture coopère à la fois avec le solaire et la couronne.

Un satellite à double étage comprend deux dentures qui sont situées sur des diamètres différents. Une première denture coopère avec le solaire et une seconde denture coopère en général avec la couronne.

Un réducteur à double étage d'engrènement présente l'avantage d'avoir un rapport de réduction plus important qu'un réducteur à simple étage d'engrènement de même encombrement.

Dans le cadre d'un dispositif d'entraînement d'au moins une roue d'un train d'atterrissage, l'utilisation d'un moteur électrique et d'un réducteur pour l'entraînement de la roue génère de fortes contraintes d'encombrement. Le diamètre extérieur du réducteur est limité par la dimension de la jante de la roue, et le diamètre intérieur du réducteur est fortement contraint par le diamètre du moyeu de la roue. De plus, l'utilisation d'un moteur électrique tournant généralement à des vitesses élevées nécessite l'utilisation d'un réducteur proposant un grand rapport de réduction afin de proposer une vitesse de sortie qui correspond à la faible vitesse de rotation de la roue. Les trains de type épicycloïdal et planétaire de la technique actuelle ne permettent pas d'obtenir ces niveaux de réduction dans un encombrement aussi restreint.

L'invention propose une solution à au moins une partie de ces problèmes, qui est simple, efficace et économique.

### Résumé de l'invention

L'invention concerne un dispositif d'entraînement d'au moins une roue d'un train d'atterrissage d'aéronef, ce dispositif comportant :
- au moins une roue de train d'atterrissage, cette roue comportant une jante ayant un axe de rotation,
- un moteur électrique comportant un arbre,
- un système de transmission mécanique entre l'arbre du moteur et la jante, ce système de transmission mécanique comprenant un réducteur mécanique,
caractérisé en ce que le réducteur mécanique comporte :
- un solaire solidaire en rotation de l'arbre du moteur, ce solaire étant centré sur l'axe et comportant une denture externe,
- une couronne centrée sur l'axe et qui comporte deux dentures internes, et
- des satellites qui sont portés par un porte-satellites et qui ont chacun un plan médian de symétrie perpendiculaire à l'axe, chacun des satellites comportant trois dentures externes, dont une denture externe médiane qui est engrenée avec la denture du solaire, et deux dentures externes latérales qui sont respectivement disposées de part et d'autre de la denture externe médiane et qui sont respectivement engrenées avec les dentures de la couronne.

L'invention propose ainsi un dispositif d'entraînement d'au moins une roue d'un train d'atterrissage d'aéronef, qui est équipé d'un réducteur à train épicycloïdal ou planétaire dont les satellites sont à double étage symétrique. Un premier étage de chaque satellite, formé par la denture médiane de chaque satellite, engrène avec la denture du solaire.

Un second étage de chaque satellite, formé par les deux dentures latérales de chaque satellite, engrène avec la couronne qui a elle-même deux dentures.

Dans un mode de réalisation, la couronne est fixe et c'est le porte-satellites qui est mobile en rotation et relié à la jante de la roue. En variante, c'est l'inverse, le porte-satellites est fixe et c'est la couronne qui est mobile en rotation et reliée à la jante de la roue. Le solaire est quant à lui relié au rotor du moteur électrique.

L'invention est compatible d'un réducteur à plusieurs étages comme évoqué dans ce qui précède. Elle est également compatible d'un réducteur dont le porte-satellites ou la couronne est mobile en rotation comme un réducteur épicycloïdal, planétaire ou différentiel. Elle est également compatible avec des dentures de n'importe quel type (droites, hélicoïdales, chevrons, etc.). L'invention est en outre compatible avec un porte-satellites de type monobloc ou de type cage et porte-cage. Ces différents types de réducteur étant bien connus de l'homme du métier. La solution proposée ci-dessous est compatible de tout type de palier satellite, qu'il soit composé d'éléments roulants, d'un palier hydrodynamique, lorsqu'il entre dans le champ de protection de la revendication 1 annexée.

Le dispositif selon l'invention peut comprendre une ou plusieurs des caractéristiques suivantes, prises isolément les unes des autres, ou en combinaison les unes avec les autres :
- la couronne est fixe et est fixée à un stator du dispositif, et le porte-satellites est mobile en rotation autour de l'axe et est fixé à la jante ;
- la couronne est mobile en rotation autour de l'axe et est fixée à la jante, et le porte-satellites est fixe et est fixé à un stator du dispositif ;
- les dentures de la couronne sont identiques ;
- la denture du solaire et la denture externe médiane de chacun des satellites sont en chevron ;
- les dentures externes latérales de chacun des satellites et les dentures de la couronne sont en hélice ;
- le moteur a une forme annulaire centrée sur l'axe et est disposé à côté du réducteur ;
- le moteur est disposé à côté et au niveau des satellites ;
- la denture médiane a un diamètre supérieur au diamètre des dentures latérales ;
- le porte-satellites comprend une unique paroi transversale qui est perpendiculaire à l'axe et sur laquelle les satellites sont montés en porte-à-faux.
- le porte-satellites comprend deux parois transversales qui sont perpendiculaires à l'axe et entre lesquelles sont montés les satellites, au moins l'une de ces parois transversales voire les deux comporte un orifice central de passage de l'arbre du moteur ;
- les satellites sont chacun centrés et guidés par :
   + deux paliers à rouleaux portés par le porte-satellites, les dentures de chacun des satellites étant situées axialement entre ces paliers à rouleaux,
   + ou trois paliers à aiguilles portés par le porte-satellites, chacun des paliers à aiguilles étant radialement au droit d'une des dentures du satellite.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en perspective d'une roue d'un train d'atterrissage d'aéronef et d'un dispositif d'entraînement de cette roue,
[Fig.2] la figure 2 est une vue partielle en coupe axiale d'un réducteur mécanique,
[Fig.3] la figure 3 est une autre vue partielle en coupe axiale d'un réducteur mécanique,
[Fig.4] la figure 4 est une vue schématique en coupe axiale d'un réducteur à double étage d'engrènement symétrique pour un dispositif selon l'invention,
[Fig.5] la figure 5 est une vue schématique en perspective d'un réducteur du type de celui de la figure 4 ;
[Fig.6] la figure 6 est une vue schématique en coupe axiale d'un dispositif selon l'invention équipé du réducteur de la figure 4,
[Fig.7] la figure 7 est vue schématique en coupe axiale d'une variante de réalisation d'un dispositif selon l'invention,
[Fig.8] la figure 8 est une vue schématique en coupe axiale d'une autre variante de réalisation d'un dispositif selon l'invention,
[Fig.9] la figure 9 est vue schématique en coupe axiale d'un satellite et de paliers de guidage de ce satellite ; et
[Fig.10] la figure 10 est vue schématique en coupe axiale d'un satellite et de paliers de guidage de ce satellite.

### Description détaillée de l'invention

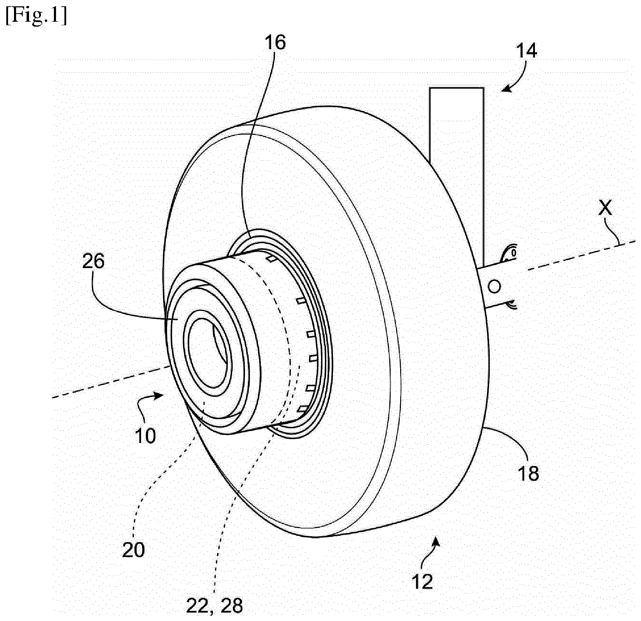

La figure 1 montre un dispositif 10 d'entraînement d'au moins une roue 12 d'un train d'atterrissage 14 d'aéronef.

La roue 12 comporte une jante 16 qui a un axe de rotation X. De manière classique, cette jante 16 a une forme générale tubulaire ou de disque et porte à sa périphérie un pneu 18.

Le dispositif 10 comprend un moteur électrique 20 et un système de transmission mécanique 22 entre un arbre du moteur 20 et la jante 16 de la roue 12.

Dans l'exemple représenté, le moteur 20 et le système 22 ont chacun une forme générale annulaire et sont centrés sur l'axe X. Ils sont disposés à côté l'un de l'autre et le système 22 est installé entre le moteur 20 et la jante 16. Une partie du système 22, voire également une partie du moteur 20, pourraient être logées dans la jante 16 pour limiter l'encombrement du dispositif 10. Le moteur 20 et le système 22 peuvent être protégés par un capot cylindrique extérieur 26 en saillie sur un côté de la jante 16 ou du pneu 18.

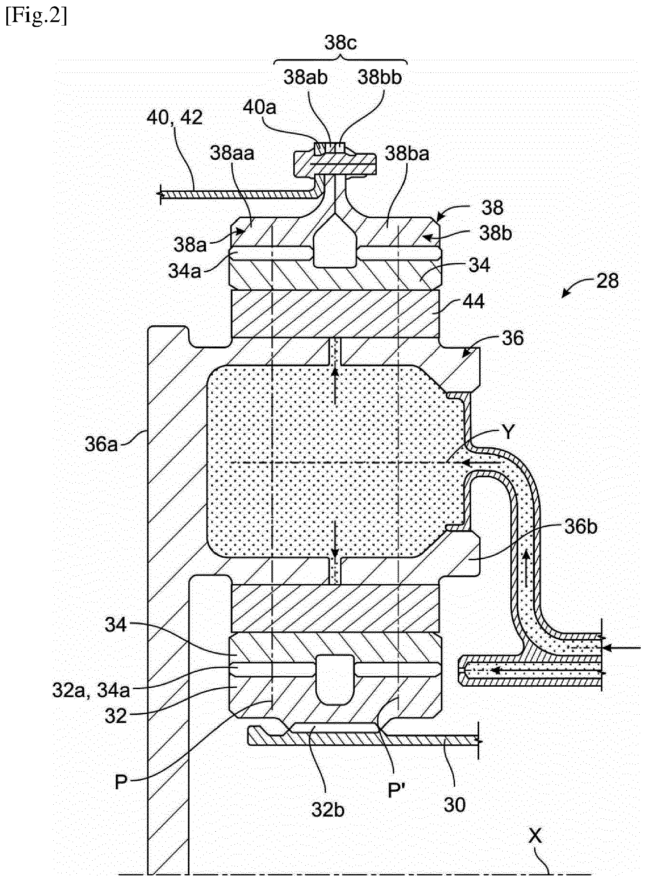

Le système de transmission mécanique 22 comprend un réducteur mécanique 28 dont des exemples de réalisation sont illustrés aux figures 2 à 5.

La figure 2 montre un réducteur épicycloïdal 28. En entrée, le réducteur 28 est relié à un arbre 30, par exemple par l'intermédiaire de cannelures internes 32a. Ainsi, l'arbre 30 entraîne un pignon planétaire appelé le solaire 32. Classiquement, le solaire 32 entraîne une série de pignons appelés satellites 34, qui sont équirépartis sur le même diamètre autour de l'axe X de rotation du solaire 32. Ce diamètre est égal au double de l'entraxe de fonctionnement entre le solaire 32 et les satellites 34. Le nombre de satellites 34 est généralement défini entre trois et sept.

L'ensemble des satellites 34 est maintenu par un châssis appelé porte-satellites 36. Chaque satellite 34 tourne autour de son propre axe Y, et engrène avec une couronne 38.

En sortie nous avons :
▪ Dans cette configuration épicycloïdale, l'ensemble des satellites 34 entraine en rotation le porte-satellite 36 autour de l'axe X. La couronne 38 est fixée à un stator via un porte-couronne 40 et le porte-satellites 36 est fixé à autre arbre 42.
▪ Dans une autre configuration planétaire, l'ensemble des satellites 34 est maintenu par un porte-satellites 36 qui est fixé à un stator. Chaque satellite entraine la couronne 38 qui est reliée à l'arbre 42 via un porte-couronne 40.
▪ Dans une autre configuration différentielle, l'ensemble des satellites 34 est maintenu par un porte-satellites 36 qui est relié à l'arbre 30. Chaque satellite 34 entraine la couronne 38 qui est rapportée à l'arbre 42 via un porte-couronne 40.

Chaque satellite 34 est monté libre en rotation à l'aide d'un palier 44, par exemple de type roulement ou palier hydrodynamique. Chaque palier 44 est monté sur un des axes 36b du porte-satellites 36 et tous les axes 36b sont positionnés les uns par rapport aux autres à l'aide d'un ou plusieurs châssis structurels 36a du porte-satellites 36. Il existe un nombre d'axes 36b et de paliers 44 égal au nombre de satellites 34. Pour des raisons de fonctionnement, de montage, de fabrication, de contrôle, de réparation ou de rechange, les axes 36b et le châssis 36a peuvent être séparés en plusieurs pièces.

Pour les mêmes raisons citées précédemment, la denture 34a d'un satellite 34 peut être séparée en plusieurs hélices ou dents présentant chacun un plan médian P, P'. Dans l'exemple représenté, chaque satellite 34 comprend deux séries de dents en chevron coopérant avec une couronne 38 séparée en deux demi-couronnes :
▪ Un anneau amont 38a constituée d'une jante 38aa et d'une demi-bride de fixation 38ab. Sur la jante 38aa se trouve l'hélice avant engrenée avec une hélice de la denture 34a de chaque satellite 34. L'hélice de la denture 34a engrène également avec celle du solaire 32.
▪ Un anneau aval 38b constituée d'une jante 38ba et d'une demi-bride de fixation 38bb. Sur la jante 38ba se trouve l'hélice arrière engrenée avec une hélice de la denture 34a de chaque satellite 34. L'hélice de la denture 34a engrène également avec celle du solaire 32.

Si les largeurs d'hélice varient entre le solaire 32, les satellites 34 et la couronne 38 à cause des recouvrements de denture, elles sont toutes centrées sur un plan médian P pour les dents amont et sur un autre plan médian P' pour les dents aval.

La figure 2 illustre ainsi le cas d'un réducteur à simple étage d'engrènement, c'est-à-dire qu'une même denture 34a de chaque satellite 34 coopère à la fois avec le solaire 32 et la couronne 38. Même si la denture 34a comprend deux séries de dents, ces dents ont le même diamètre moyen et forment une seule et même denture appelée chevron.

La demi-bride de fixation 38ab de l'anneau amont 38a et la demi-bride de fixation 38bb de l'anneau aval 38b forment la bride de fixation 38c de la couronne. La couronne 38 est fixée au porte-couronne 40 en assemblant la bride de fixation 38c de la couronne 38 et une bride de fixation 40a du porte-couronne 40 à l'aide d'un montage boulonné par exemple.

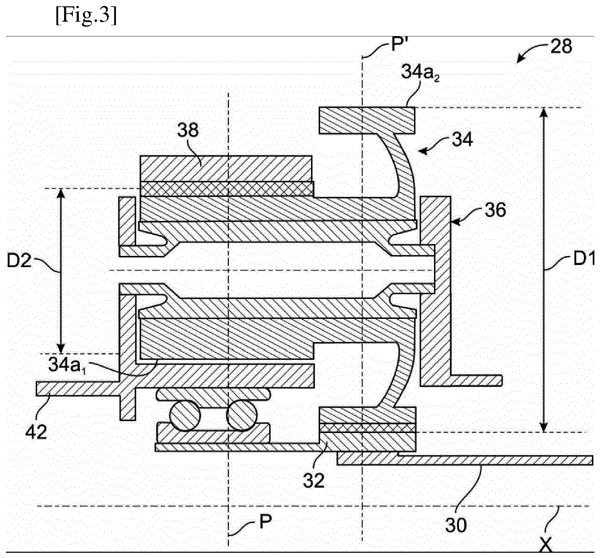

La figure 3 montre un autre exemple d'architecture de réducteur, dit à double étage d'engrènement, dans lequel chaque satellite 34 comprend deux dentures 34a1, 34a2 distinctes configurées pour coopérer respectivement avec la couronne 38 et le solaire 32.

Dans cette figure 3, les éléments déjà décrits dans ce qui précède sont désignés par les mêmes références.

La denture 34a1 d'engrènement avec la couronne 38 un diamètre moyen noté D2 et est situé dans un plan médian P. La denture 34a2 d'engrènement avec le solaire 32 a un diamètre moyen noté D1 et est situé dans un autre plan médian P'. Les plans médians P, P' sont parallèles entre eux et perpendiculaires à l'axe X. Le diamètre D2 est inférieur au diamètre D1. Enfin, chaque denture 34a1, 34a2 comprend ici une seule hélice.

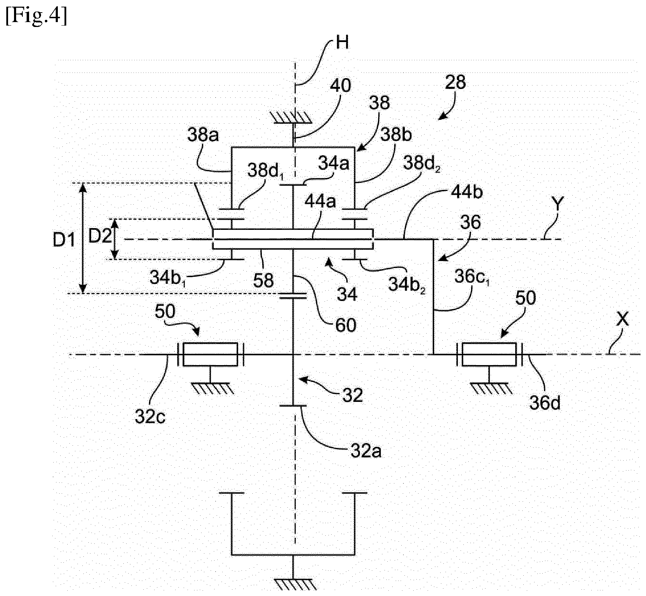

Les figures 4 à 6 montrent un réducteur 28 à double denture symétrique ainsi qu'un dispositif 10 d'entraînement d'au moins une roue d'un train d'atterrissage d'aéronef.

Dans l'exemple représenté, le réducteur 28 est du type à train épicycloïdal et comprend :
- un solaire 32 ayant un axe de rotation X,
- une couronne 38 qui s'étend autour du solaire 32 et qui est configurée pour être immobile en rotation autour de l'axe X, et
- des satellites 34 qui sont engrenés avec le solaire 32 et la couronne 38 et qui sont maintenus par un porte-satellites 36 qui est configuré pour être mobile en rotation autour de l'axe X.

On définit le plan H comme étant un plan médian perpendiculaire à l'axe X et passant sensiblement au milieu du réducteur 28.

Le solaire 32 comprend une denture externe 32a d'engrènement avec les satellites 34. La denture 32a peut être du type en chevron et présenter deux séries de dents adjacentes. La denture 32a est symétrique par rapport au plan **H,** ses dents étant situées de part et d'autre du plan H.

Dans l'exemple représenté, le solaire 32 comprend un arbre 32c qui peut être celui du moteur 20 ou qui peut être relié à l'arbre du moteur 20, et un pignon comportant à sa périphérie externe la denture externe 32a.

La couronne 38 est formée par deux anneaux indépendants 38a, 38b et comprend deux dentures internes 38d1, 38d2 portées respectivement par les deux anneaux 38a, 38b.

Les dentures 38d1, 38d2 peuvent chacune être du type en hélice. Les dentures 38d1, 38d2 sont symétriques par rapport au plan H.

Les anneaux 38a, 38b sont disposés de manière symétrique par rapport au plan H qui s'étend donc entre ces anneaux. Les anneaux 38a, 38b sont reliés et fixés à un porte-couronne 40 qui est fixé à un stator du dispositif 10.

Comme c'est le cas de la couronne 38, le porte-couronne 40 présente une symétrie par rapport au plan H qui coupe le porte-couronne 40 en son milieu. Chaque satellite 34 comporte une denture externe médiane 34a de diamètre moyen D1 pour l'engrènement avec le solaire 32, et deux dentures externes latérales 34b1, 34b2 de diamètre D2, différent de D1 et en particulier inférieur à D1, pour l'engrènement avec les dentures 38d1, 38d2 de la couronne 38. Ces diamètres sont des diamètres moyens mesurés depuis l'axe Y de chaque satellite 34 et représente la moyenne entre le diamètre maximal et le diamètre minimal d'une denture de ce satellite.

Les dentures 34b1, 34b2 sont identiques, de même que les dentures 38d1, 38d2.

Chaque satellite 34 comprend un manchon cylindrique 58 et un voile annulaire 60 s'étendant sensiblement radialement vers l'extérieur depuis le milieu de ce manchon 58. Les dentures 34b1, 34b2 en hélice sont situées respectivement sur les extrémités axiales du manchon 58. La denture 34a en chevron est située à la périphérie externe du voile 60.

La denture 34a est traversée en son milieu par le plan H. Les dentures 34b1, 34b2 sont également disposées de manière symétrique par rapport au plan H.

La denture 34a et la périphérie externe du voile 60 ont une dimension axiale qui est inférieure à la distance axiale entre les anneaux 38a, 38b, de façon à ce que chaque satellite 34 puisse librement tourner dans le porte-couronne 40 et entre les anneaux 38a, 38b.

Chacun des satellites 34 est monté sur un corps cylindrique 44a qui traverse le satellite 34, et en particulier son manchon 58, et qui est fixé au porte-satellites 36.

Le corps 44a d'un palier 44 s'étend le long de l'axe Y et comprend à au moins l'une de ses extrémités longitudinales une extension 44b logée dans un orifice formant un siège du porte-satellites 36.

Le corps 44a est en général tubulaire et comprend un alésage interne de circulation d'huile qui communique en général avec des conduits d'amenée d'huile jusqu'à une surface cylindrique externe du corps en vue de la formation du film d'huile entre cette surface et une surface cylindrique interne du satellite 34.

Dans le cadre de la présente invention, le solaire 32 est accouplé avec l'arbre 30 du moteur électrique 20. La couronne 38 est fixe et le porte-satellites 36 est relié à la jante 16 de la roue 12.

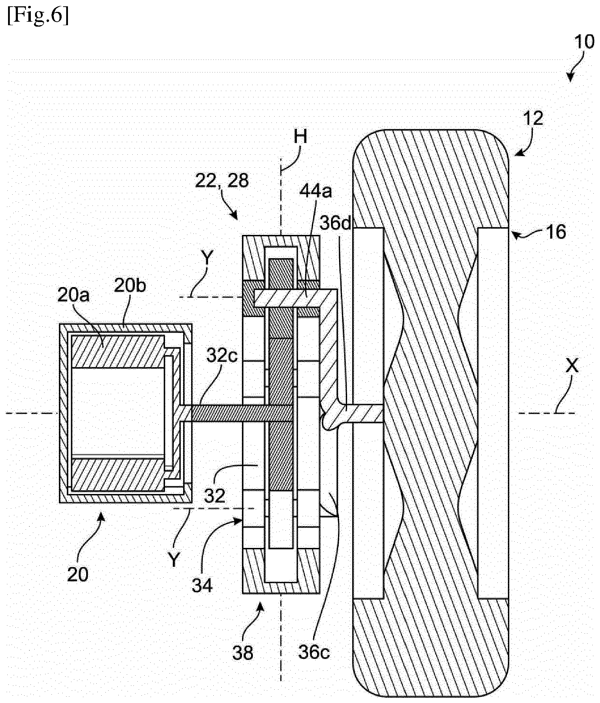

La figure 6 montre que le moteur 20 a une forme annulaire centré sur l'axe X et est disposé à côté du réducteur 28. Préférentiellement, le moteur 20 est disposé à côté et au niveau des satellites 34.

Dans l'exemple représenté à la figure 4, le porte-satellites 36 comprend une unique paroi transversale 36c1 qui est perpendiculaire à l'axe X et sur laquelle les satellites 34 sont montés en porte-à-faux. Les corps cylindriques 44a précités sont ainsi montés par une seule de leurs extrémités dans des orifices de cette paroi transversale 36c1.

Le porte-satellites 36 comprend en outre un arbre 36d ou une portion d'arbre relié à la jante 16. Cette liaison peut être faite par un système de débrayage qui est apte à adopter deux positions : une première position dans laquelle l'arbre de sortie du réducteur 28, et en particulier l'arbre 36d, est accouplé à la jante 16 ou à l'arbre de la jante, et une seconde position dans laquelle cet arbre de sortie est désaccouplé de la jante 16 qui est alors en roue libre.

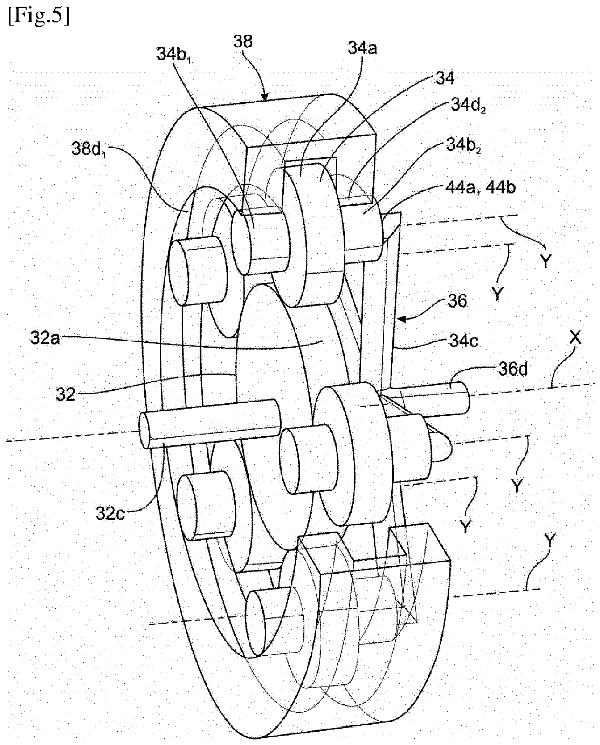

Dans le cas de la figure 5, la paroi transversale 36c est remplacée par des bras radiaux s'étendant depuis l'arbre 36d jusqu'aux corps cylindriques 44a. Le nombre de ces bras est égal au nombre de satellites 34 et les bras sont de préférence régulièrement répartis autour de l'axe X.

Comme on le voit à la figure 4, les arbres 32c, 36d sont centrés et guidés en rotation autour de l'axe X par des paliers 50.

La figure 6 montre que le moteur 20 du dispositif 10 comprend un rotor 20a et un stator 20b. Le rotor 20a a ici une forme annulaire et est relié à l'arbre 32c. Le stator 20b a une forme annulaire et s'étend autour du rotor 20a et aussi sur un côté du rotor 20a opposé au réducteur 28. La couronne 38 peut être reliée fixement au stator 20b.

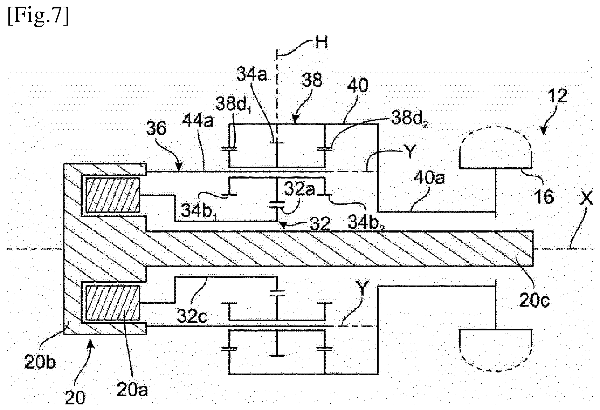

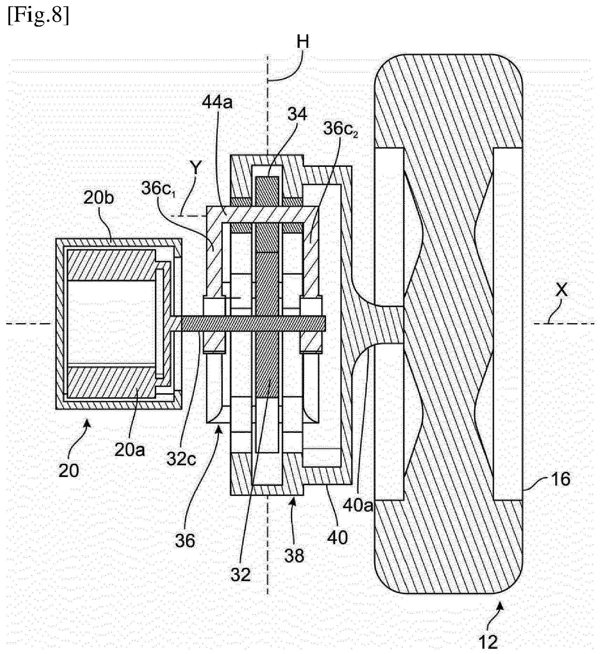

Dans les modes de réalisation des figures 7 et 8, le réducteur 28 est du type à train planétaire et diffère du précédent mode de réalisation essentiellement en ce que son porte-satellites 36 est fixe et sa couronne 38 est mobile.

C'est donc la couronne 38 qui est fixée à la jante 16 de la roue 12. Pour cela, le porte-couronne 40 est relié à la jante 16 ou comprend une portion d'arbre 40a de liaison à la jante 16.

Le porte-satellites 36 est fixé au stator 20b du moteur électrique 20 par exemple.

Les autres caractéristiques décrites dans ce qui précède en relation avec les figures 4 à 6 s'appliquent aux modes de réalisation des figures 7 et 8.

Dans le cas de la figure 7, on constate que le stator 20b du moteur 20 comprend une tige 20c qui est centrée sur l'axe X et qui s'étend le long de l'axe X en traversant successivement le réducteur 28 et la jante 16.

Dans le cas de la figure 8, on constate que le porte-satellites 36 comprend deux parois transversales 36c1, 36c2 qui sont perpendiculaires à l'axe X et entre lesquelles sont montés les satellites 34. Au moins l'une de ces parois transversales 36c1, 36c2 voire les deux, comporte un orifice central de passage de la portion d'arbre 32c du solaire 32. Chacune des parois transversales 36c1, 36c2 pourrait être remplacée par une série de bras radiaux comme évoqué dans ce qui précède. Les corps cylindriques 44a de montage des satellites 34 seraient alors reliés à deux bras via leurs deux extrémités axiales.

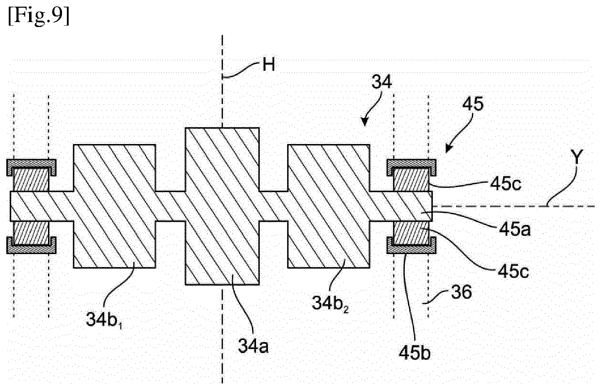

La figure 9 montre un exemple de guidage des satellites 34 du réducteur 28. Les satellites 34 sont guidés par des paliers 45 à roulement qui sont ici plus particulièrement des paliers à rouleaux. Les paliers 45 de guidage de chaque satellite 34 sont au nombre de deux et sont montés autour des extrémités longitudinales de ce satellite, entre ces extrémités et le porte-satellites 36. Chacun des paliers 45 comprend une bague interne 45a portée par le satellite 34 ou intégrée à ce dernier, et une bague externe 45b portée par le porte-satellites 36. Les rouleaux 45c sont montés entre les bagues 45a, 45b. On constate dans la figure 9 que les dentures 34, 34b1, 34b2 des satellites 34 sont situées entre les paliers 45. Ce montage permet d'équilibrer au mieux les moments appliqués sur les satellites 34 par les engrènements.

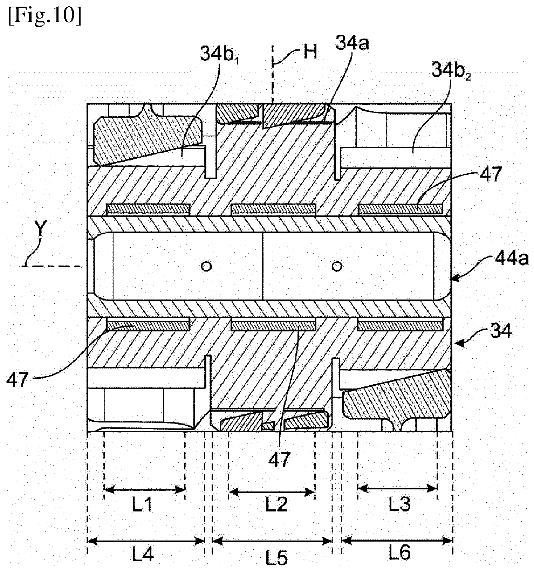

En variante et comme représenté à la figure 10, les satellites 34 sont guidés par des paliers 47 à aiguilles. Ces paliers 47 sont au nombre de trois et sont montés radialement entre les satellites 34 et les corps 44a. Chacun des paliers 47 est aligné radialement avec une des dentures 34a, 34b1, 34b2 du satellite 34. Ce montage permet de réduire l'encombrement axial.

Chacun des paliers 47 peut avoir une longueur ou dimension axiale L1, L2, L3 mesurée le long de l'axe Y, qui représente au moins 80% de la longueur ou dimension axiale L4, L5, L6 de la denture 34a, 34b1, 34b2 correspondante.

Dans encore une autre variante non représentée, les paliers de guidage des satellites 34 sont des paliers lisses ou paliers hydrodynamiques.

Le réducteur 28 tel que décrit dans ce qui précède permet un grand rapport de réduction par rapport aux réducteurs de la technique antérieure, et a un faible encombrement, ces deux paramètres étant importants pour l'utilisation de ce réducteur dans un dispositif d'entraînement d'au moins une roue d'un train d'atterrissage d'aéronef.

## Revendications

1. Dispositif (10) d'entraînement d'au moins une roue (12) d'un train d'atterrissage (14) d'aéronef, ce dispositif (10) comportant :
- au moins une roue (12) de train d'atterrissage, cette roue (12) comportant une jante (16) ayant un axe de rotation (X),
- un moteur (20) électrique comportant un arbre,
- un système de transmission mécanique (22) entre l'arbre du moteur (20) et la jante (16), ce système de transmission mécanique (22) comprenant un réducteur mécanique (28),
où le réducteur mécanique (28) comporte :
- un solaire (32) solidaire en rotation de l'arbre du moteur (20), ce solaire (32) étant centré sur l'axe (X) et comportant une denture externe (32a),
- une couronne (38) centrée sur l'axe (X) et qui comporte deux dentures internes (38d1, 38d2), et
- des satellites (34) qui sont portés par un porte-stellites (36) et qui ont chacun un plan médian de symétrie perpendiculaire à l'axe (X), chacun des satellites (34) comportant trois dentures externes (34a, 34b1, 34b2), dont une denture externe médiane qui est engrenée avec la denture (32a) du solaire, et deux dentures externes latérales (34b1, 34b2) qui sont respectivement disposées de part et d'autre de la denture externe médiane (34a) et qui sont respectivement engrenées avec les dentures (38d1, 38d2) de la couronne (38),
et en ce que les satellites (34) sont chacun centrés et guidés par :
- deux paliers à rouleaux (45) portés par le porte-satellites (36), les dentures (34a, 34b1, 34b2) de chacun des satellites (34) étant situées axialement entre ces paliers à rouleaux (45),
- ou trois paliers à aiguilles (47) portés par le porte-satellites (36), chacun des paliers à aiguilles (47) étant radialement au droit d'une des dentures (34a, 34b1, 34b2) du satellite (34).

2. Dispositif (10) selon la revendication 1, dans lequel la couronne (38) est fixe et est fixée à un stator du dispositif (10), et le porte-satellites (36) est mobile en rotation autour de l'axe (X) et est fixé à la jante (16).

3. Dispositif (10) selon la revendication 1, dans lequel la couronne (38) est mobile en rotation autour de l'axe (X) et est fixée à la jante (16), et le porte-satellites (36) est fixe et est fixé à un stator du dispositif (10).

4. Dispositif (10) selon l'une des revendications précédentes, dans lequel les dentures (38d1, 38d2) de la couronne (38) sont identiques.

5. Dispositif (10) selon l'une des revendications précédentes, dans lequel la denture (32a) du solaire (32) et la denture externe médiane (34a) de chacun des satellites (34) sont en chevron.

6. Dispositif (10) selon l'une des revendications précédentes, dans lequel les dentures externes latérales (34b1 ,34b2) de chacun des satellites (34) et les dentures de la couronne (38) sont en hélice.

7. Dispositif (10) selon l'une des revendications précédentes, dans lequel le moteur (20) a une forme annulaire centrée sur l'axe (X) et est disposé à côté du réducteur (28).

8. Dispositif (10) selon l'une des revendications précédentes, dans lequel le moteur (20) est disposé à côté et au niveau des satellites (34).

9. Dispositif (10) selon l'une des revendications précédentes, dans lequel la denture médiane (34a) a un diamètre supérieur au diamètre des dentures latérales (34b1, 34b2).

10. Dispositif (10) selon l'une des revendications précédentes, dans lequel le porte-satellites (36) comprend une unique paroi transversale (36c1) qui est perpendiculaire à l'axe (X) et sur laquelle les satellites (34) sont montés en porte-à-faux.

11. Dispositif (10) selon l'une des revendications 1 à 7, dans lequel le porte-satellites (36) comprend deux parois transversales (36c1, 36c2) qui sont perpendiculaires à l'axe (X) et entre lesquelles sont montés les satellites (34), au moins l'une de ces parois transversales (36c1, 36c2) voire les deux comportant un orifice central de passage de l'arbre du moteur (20).

## Patentansprüche

1. Vorrichtung (10) zum Antrieb mindestens eines Rades (12) eines Fahrwerks (14) eines Luftfahrzeugs, wobei diese Vorrichtung (10) umfasst:
- mindestens ein Rad (12) des Fahrwerks, wobei dieses Rad (12) eine Felge (16), die eine Drehachse (X) aufweist, umfasst,
- einen Elektromotor (20), der eine Welle umfasst,
- ein mechanisches Kraftübertragungssystem (22) zwischen der Welle des Motors (20) und der Felge (16), wobei dieses mechanische Kraftübertragungssystem (22) ein mechanisches Untersetzungsgetriebe (28) umfasst,
wobei das mechanische Untersetzungsgetriebe (28) umfasst:
- ein Sonnenrad (32), das drehfest mit der Welle des Motors (20) verbunden ist, wobei dieses Sonnenrad (32) auf der Achse (X) zentriert ist und eine äußere Verzahnung (32a) aufweist,
- eine Krone (38), die auf der Achse (X) zentriert ist und zwei innere Verzahnungen (38d1, 38d2) umfasst, und
- Planeten (34), die von einem Planetenträger (36) getragen werden und die jeweils eine zur Achse (X) senkrechte Mittelsymmetrieebene aufweisen, wobei jedes der Planeten (34) drei äußere Verzahnungen (34a, 34b1, 34b2) umfasst, darunter eine mittlere äußere Verzahnung, die mit der Verzahnung (32a) des Sonnenrades in Eingriff steht, und zwei seitliche äußere Verzahnungen (34b1, 34b2), die jeweils beiderseits der mittleren äußeren Verzahnung (34a) angeordnet sind und jeweils mit den Verzahnungen (38d1, 38d2) der Krone (38) in Eingriff stehen,
und dass die Planeten (34) jeweils zentriert und geführt werden durch:
- zwei Rollenlager (45), die von dem Planetenträger (36) getragen werden, wobei die Verzahnungen (34a, 34b1, 34b2) jedes der Planeten (34) axial zwischen diesen Rollenlagern (45) angeordnet sind,
- oder drei Nadellager (47), die von dem Planetenträger (36) getragen werden, wobei jedes der Nadellager (47) radial in Höhe einer der Verzahnungen (34a, 54a) des Planeten (34) liegt.

2. Vorrichtung (10) nach Anspruch 1, wobei die Krone (38) ortsfest ist und an einem Stator der Vorrichtung (10) befestigt ist und der Planetenträger (36) um die Achse (X) drehbeweglich ist und an der Felge (16) befestigt ist.

3. Vorrichtung (10) nach Anspruch 1, wobei die Krone (38) um die Achse (X) drehbeweglich ist und an der Felge (16) befestigt ist, und der Planetenträger (36) ortsfest ist und an einem Stator der Vorrichtung (10) befestigt ist.

4. Vorrichtung (10) nach einem der vorstehenden Ansprüche, wobei die Verzahnungen (38d1, 38d2) der Krone (38) identisch sind.

5. Vorrichtung (10) nach einem der vorstehenden Ansprüche, wobei die Verzahnung (32a) des Sonnenrades (32) und die mittlere äußere Verzahnung (34a) jedes der Planeten (34) Pfeilverzahnungen sind.

6. Vorrichtung (10) nach einem der vorstehenden Ansprüche, wobei die seitlichen äußeren Verzahnungen (34b1, 34b2) jedes der Planeten (34) und die Verzahnungen der Krone (38) Schrägverzahnungen sind.

7. Vorrichtung (10) nach einem der vorstehenden Ansprüche, wobei der Motor (20) eine Ringform aufweist, die auf der Achse (X) zentriert ist, und neben dem Untersetzungsgetriebe (28) angeordnet ist.

8. Vorrichtung (10) nach einem der vorstehenden Ansprüche, wobei der Motor (20) neben und im Bereich der Planeten (34) angeordnet ist.

9. Vorrichtung (10) nach einem der vorstehenden Ansprüche, wobei die mittlere Verzahnung (34a) einen Durchmesser aufweist, der größer ist als der Durchmesser der seitlichen Verzahnungen (34b1, 34b2).

10. Vorrichtung (10) nach einem der vorstehenden Ansprüche, wobei der Planetenträger (36) eine einzige Querwand (36c1) umfasst, die senkrecht zur Achse (X) verläuft und an der die Planeten (34) freitragend gelagert sind.

11. Vorrichtung (10) nach einem der Ansprüche 1 bis 7, wobei der Planetenträger (36) zwei Querwände (36c1, 36c2) umfasst, die senkrecht zur Achse (X) verlaufen und zwischen denen die Planeten (34) gelagert sind, wobei mindestens eine dieser Querwände (36c1, 36c2) oder sogar beide eine zentrale Öffnung zum Durchgang der Motorwelle (20) umfassen.

## Claims

1. A device (10) for driving at least one wheel (12) of an aircraft landing gear (14), this device (10) comprising:
- at least one landing gear wheel (12), this wheel (12) comprising a rim (16) having an axis of rotation (X),
- an electric motor (20) comprising a shaft,
- a mechanical transmission system (22) between the shaft of the motor (20) and the rim (16), this mechanical transmission system (22) comprising a mechanical reducer (28),
**characterised in that** the mechanical reducer (28) comprises:
- a sun gear (32) secured in rotation to the shaft of the motor (20), this sun gear (32) being centred on the axis (X) and comprising an external toothing (32a),
- a ring gear (38) centred on the axis (X) and comprising two internal toothings (38d1, 38d2), and
- planet gears (34) which are carried by a planet carrier (36) and which each have a median plane of symmetry perpendicular to the axis (X), each of the planet gears (34) comprising three external toothings (34a, 34b1, 34b2), including a median external toothing which is meshed with the toothing (32a) of the sun gear, and two lateral external toothings (34b1, 34b2) which are respectively arranged on either side of the median external toothing (34a) and which are respectively meshed with the toothings (38d1, 38d2) of the ring gear (38),
and **in that** the planet gears (34) are each centred and guided by:
- two roller bearings (45) carried by the planet carrier (36), the toothings (34a, 34b1, 34b2) of each of the planet gears (34) being located axially between these roller bearings (45),
- or three needle bearings (47) carried by the planet carrier (36), each of the needle bearings (47) being radially in line with one of the toothings (34a, 34b1, 34b2) of the planet gear (34).

2. The device (10) according to claim 1, wherein the ring gear (38) is stationary and is attached to a stator of the device (10), and the planet carrier (36) is movable in rotation about the axis (X) and is attached to the rim (16).

3. The device (10) according to claim 1, wherein the ring gear (38) is movable in rotation about the axis (X) and is attached to the rim (16), and the planet carrier (36) is stationary and is attached to a stator of the device (10).

4. The device (10) according to one of the preceding claims, wherein the toothings (38d1, 38d2) of the ring gear (38) are identical.

5. The device (10) according to one of the preceding claims, wherein the toothing (32a) of the sun gear (32) and the median external toothing (34a) of each of the planet gears (34) are herringbone-shaped.

6. The device (10) according to one of the preceding claims, wherein the lateral external toothings (34b1, 34b2) of each of the planet gears (34) and the toothings of the ring gear (38) are helical.

7. The device (10) according to one of the preceding claims, wherein the motor (20) has an annular shape centred on the axis (X) and is arranged next to the reducer (28).

8. The device (10) according to one of the preceding claims, wherein the motor (20) is arranged next to and at the level of the planet gears (34).

9. The device (10) according to one of the preceding claims, wherein the median toothing (34a) has a diameter greater than the diameter of the lateral toothings (34b1, 34b2).

10. The device (10) according to any of the preceding claims, wherein the planet carrier (36) comprises a single transverse wall (36c1) which is perpendicular to the axis (X) and on which the planet gears (34) are cantilevered.

11. The device (10) according to one of claims 1 to 7, wherein the planet carrier (36) comprises two transverse walls (36c1, 36c2) which are perpendicular to the axis (X) and between which the planet gears (34) are mounted, at least one of these transverse walls (36c1, 36c2) or both comprising a central orifice for the passage of the shaft of the motor (20).
